# EUROPEAN PATENT APPLICATION

(11) **EP 2 924 836 A2**
(43) Date of publication of application: **30.09.2015**
(21) Application number: 15386009.3
(22) Date of filing: 24.03.2015
(51) Int. Cl.: H02G 11/02

(54) **A NEW TYPE OF POWER CORD**

(30) Priority: 26.03.2014 GR 20140100156
(71) Applicant: Kallitsis, Efthimios, 16672 Vari Attikis (GR)
(72) Inventor: Kallitsis, Efthimios, 16672 Vari Attikis (GR)

(57) **Abstract**

The invention relates to a new type of power cord, which has an accessible part (1) and a wrapping mechanism housing (2) in which a winding cylinder (3) is arranged. Around that an insulated wire with a ground conduit (4) is wound either manually by a winding lever (6) or automatically by an electric motor (7). The one end of the wire is coupled, through a conical mouth (12) and a passage tube (13), to an insulated wire of phase and neutral conduits (18) at the connection cone (14). The coupling is effected by a male (31) and a female Velcro (32), either by a connection component (33). The connected pair of wires (19) ends to a socket terminal (21) while the other two ends of the insulated wires end to a plug (23). The power cord may have a safety relay (22), an automatic fuse (24), a thermal fuse (25) and measuring instruments.

## Description

### STATE OF THE ART

The invention relates to the field of the wire extensions and in particular to the manufacturing of a power cord system with reduced inductive currents and reduced power consumption.

### BACKGROUND OF THE INVENTION

The novel power cord disclosed in the present invention has not been disclosed in the prior art.

The term power cord encompasses the extension wires which are widely used, in the manufacturing field, and which have a plug at their one end and one or more sockets, usually of the same type, on the other. Frequently, for convenience, the wire is wound around a winding cylinder. The usage of the power cord lies in the fact that it allows a temporal extension of the power grid, so that the needs for electric power at sites with no such provision are met. The length of the wire of a power cord may even reach 50 meters.

A problem with the use of a power cord of such length is the need for a wire of increased thickness. This is due to the fact that the longer the wire, the larger the required thickness thereof, so that the voltage drop at each end is minimized, since each additional meter of wire increases its electric resistance, reducing the supplied power. As it is apparent, the winding cylinder acquires significantly large dimensions when the wire is wound, while its weight makes it difficult to use. However, the longest possible wire length is selected, so that the user ensures that he will have a power supply where and when he needs it.

A significant problem arises also due to the inductive currents developed on the power cord wire. Since the current in the solenoid conduit increases, the magnetic field flux passing through it increases also. This increased flux in turn generates an inductive electric voltage on the circuit, which has a direction to counterbalance the magnetic flux variation causing it. Energetically, the energy of the electric current is in part converted to a magnetic energy, removing energy from the circuit. Thus there is a power consumption and a respective increase in the temperature which affects the insulation of the conduits, while at the same time the power to be provided by a power cord is reduced. The specific disadvantage is worsened when the wire of the power cord is wound around the winding cylinder, resulting to a more intense self-induction effect thereon. The usual solution provided by the technicians is the unwinding of the whole wire, spreading it in space. As it is apparent, this poses a risk both for the people moving around in the same area, because they may stumble and fall, and for the proper operation of the power cord, since the wire may be cut by an item in the same area.

Another common problem of the commercially available power cords, which is associated with the previous problems, are the common drops of the thermal safety switch that they may have. As it is known, a thermal switch serves in protecting a device against frequent overloads which may damage it. Thus, if the overload time of a device exceeds the time period set by the thermal safety switch, this is activated to interrupt the power supply. After the elimination of the cause of the overload, and after the device has been left out of order for some time, the thermal switch is recovered and the device operates normally. In the power cords, the specific problem frequently arises when high-consumption loads are connected, since in combination with the inductive currents produced, they set the power cord to its limits. As a result, the technician has to wait for the device to be cooled and returned to a state allowing its use, consuming valuable work time.

It is an object of the present invention to address the above-mentioned disadvantages and deficits of the prior art by proposing a new type of power cord, which irrespective of its length presents reduced inductive currents around its wire.

A further object of the present invention is to provide a power cord which consumes less energy since it reduces the losses substantially to the maximum possible degree.

A further object of the present invention is to enable extension of the wire, separating the ground conduits from the phase and neutral conduits. This separation leads to a reduced inductive resistance, thus conduits of a smaller cross-section are required. A further advantage is the smaller weight due to the reduced dimensions of the wires.

Another object of the invention is the provision of a power cord which does not exhibit the common problems of power supply drop or frequent activations of the thermal switch, which aims at protecting a circuit from the continuous overloads that may damage it.

A further object of the invention is the provision of a power cord, which is easily carried, as a result of the provision of a transport handle and rolling wheels, is of small dimensions and presents increased practicability. It also has measuring instruments for the basic electric magnitudes.

A further feature of the invention is the automatic winding capability of the ground wire around its reel, without needing a specific procedure for manual operation by the user.

These and further objects, features and advantages of the invention will be understood by the following detailed description.

### BRIEF DESCRIPTION OF THE FIGURES

The invention will be understood by the skilled in the art, with reference to the accompanying figures, in which the invention is depicted in an illustrative, non-limiting manner.
Figure 1 shows in perspective view an exemplary application of the power cord, depicting both the insulated wire of the phase and neutral conduits, and the single, insulated wire with a ground conduit, which is wound around its winding cylinder and connected to the insulated phase and neutral wire. The measuring instruments and the total construction of the power cord are also shown.
Figure 2 shows in detail the passage cone and the connection cone of the phase and neutral wire to the ground wire.
Figure 3 shows an exemplary manner of connecting the insulated phase and neutral wire to that of the ground, where a male and a female Velcro is employed.
Figure 4 shows an exemplary manner of connecting the phase and neutral wires to that of the ground, where an associated connection component is employed.
Figure 5 shows in detail the double input-output cone which is used for the guidance of the connected pair of phase, neutral and ground wires.

### DETAILED DESCRIPTION OF THE PREFERRED EMBODIMENT

Referring now to the accompanying figures, exemplary embodiments of the power cord of the present invention are given.

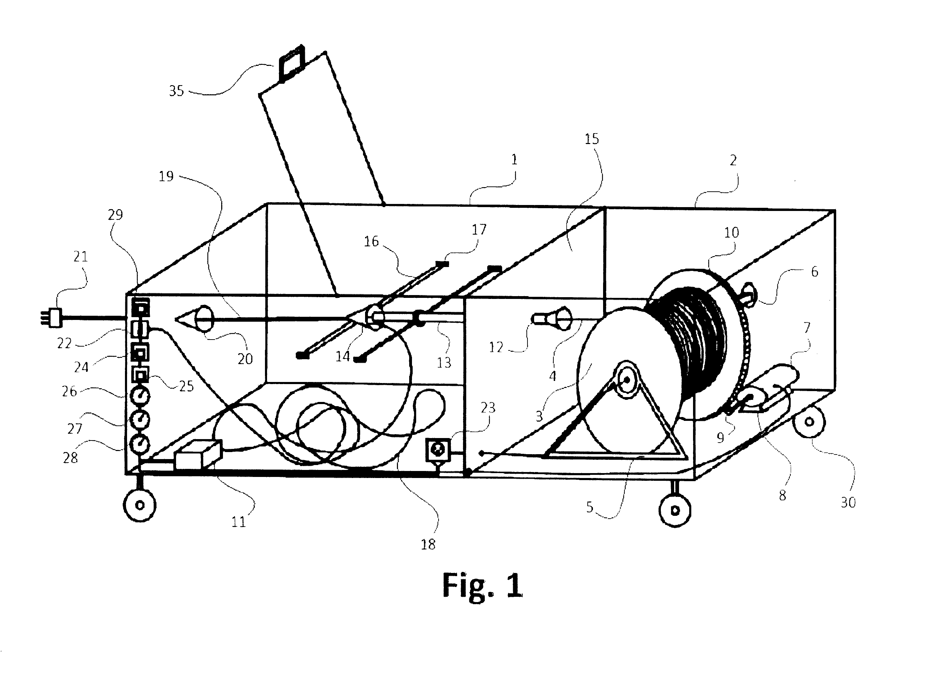

As mentioned above, one of the purposes of the invention is to provide a power cord wherein the phase-neutral and ground conduits are not permanently wound around the winding cylinder, so that inductive currents are avoided, and at the same time they are not spread around the installation. Therefore, the power cord of our invention has two different parts, the accessible part (1), figure 1, and the wrapping mechanism housing (2), which are separated by a separating element (15). In the wrapping mechanism housing (2) a winding cylinder (3) is provided, around which the insulated wire with a ground conduit (4) is wound and which is fixed on a support base (5). The winding of the wire with the ground conduit (4) around the winding cylinder (3) may be performed manually, by means of the winding lever (6), however it may also be performed automatically, by means of an electric motor (7), supported on a base (8). The electric moter (7) has a gear (9), which meshes with the geared disk (10) of the winding cylinder (3) and automatically rotates it. The energy to the electric motor (7) is supplied by means of a rechargeable battery and the charging system thereof (11), which may exemplarily be arranged in the accessible part (1).

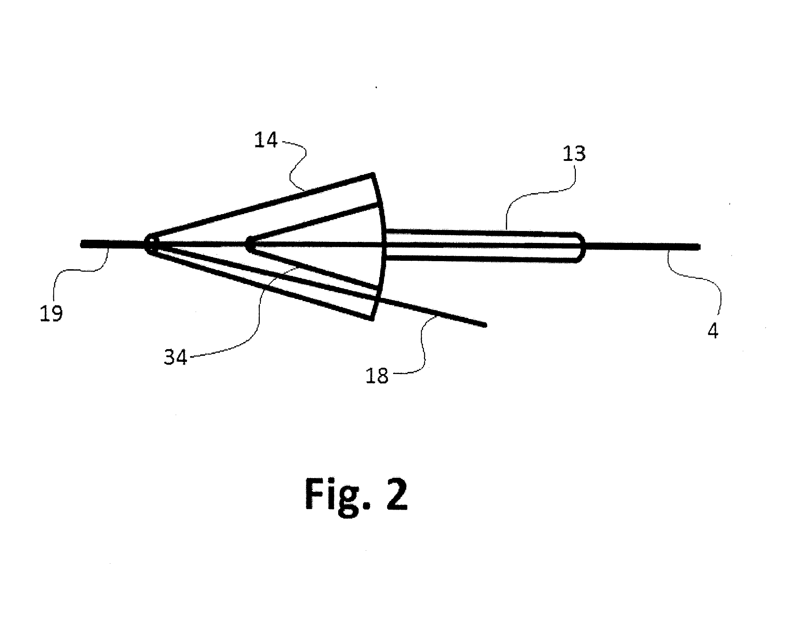

The insulated wire with the ground conduit (4) passes through a smooth passage conical mouth (12) from the wrapping mechanism housing part (2) to the accessible part (1), where through a passage tube (13) it ends to the connection cone (14). As it is shown in figure 2, the connection cone (14) has internally a smaller passage and separation cone (34), where during winding the insulated wire with the ground conduit (4) is separated from the insulated wire of the phase and neutral conduits (18). The smooth-passage conical mouth (12) is permanently fixed on separating element (15), while the passage tube (13) and the connection cone (14) rest on support bases (16) which are stably supported on respective supports (17) on the walls of the accessible part (1).

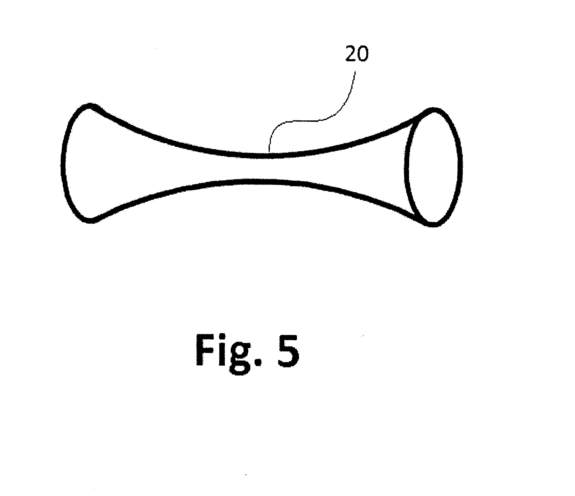

On the base of the connection cone (14), the insulated wire of the phase and neutral conduits (18) also end, so that they are connected to a single connected pair of wires (19), which through the double input-output cone (20), figure 5, ends to a schuko-type or tripolar socket (21) for the connection to the plug of the installation. The insulated wire of the phase and neutral conduits (18) is spread in the accessible part (1), while its end ends to a schuko-type or tripolar plug (23), where the user connects the desired device. Respectively on the same plug, the one end of the insulated wire with the ground conduit (4) ends, in order to provide the necessary ground. As it is apparent, each power cord, according to the present invention, may comprise more than one schuko-type or tripolar plug (23), depending on its manufacturing.

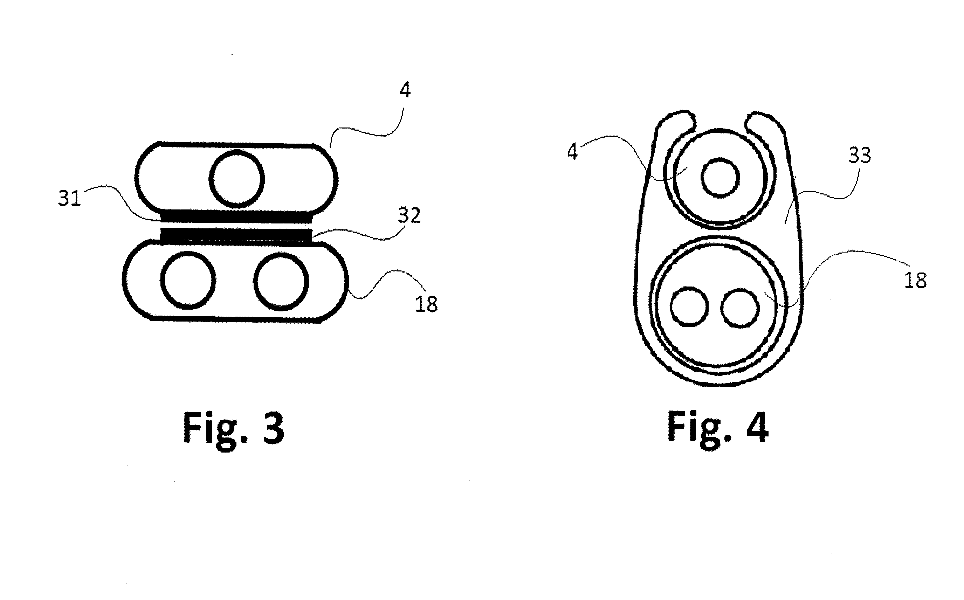

The connection of the insulated wire with the ground conduit (4) and the insulated wire of the phase and neutral conduit (18) may exemplarily be effected by the use of a male Velcro (31) connected to a female Velcro (32), figure 3, either with a connection component (33), where the insulated wire with ground conduit (4) fits therein, figure 4. This is not a limiting provision for the use of any other suitable manner of connection of the wires.

The power cord of the present invention may, as required, has a safety relay (22), an automatic supply interruption fuse of the circuit (24), a thermal supply interruption fuse (25) and any other measuring instruments which may include a voltmeter (26), an amperometer (27), a power meter (28) or any other suitable instrument. It should be noted, as presented in figure 1, that the rechargeable battery and the charging system thereof (11) are also supplied by the insulated wire of phase and neutral conduits (18), while a button (29) is used for the activation of the electric motor (7), which winds automatically the insulated wire with the ground conduit (4). Furthermore and for convenience, the power cord has rolling wheels (30), and a transport handle (35).

It should be noted that the description of the invention was made with reference to exemplary, non-limiting embodiments. Thus, any variation or modification as regards the shape, dimensions, form, materials and construction and assembly components used, as long as they do not constitute new inventive step and do not contribute to the technical advancement of the already known art, are considered as encompassed in the scope of the present invention as summarized in the following claims.

## Claims

1. A new type of power cord, **characterized in that** it consists of an accessible part (1) and an wrapping mechanism housing (2), in which a winding cylinder (3) is arranged, wherein due to the use of a winding lever (6), a manual winding of an insulated wire with a ground conduit (4) is achieved and wherein its one end terminates to a schuko-type plug (23), while its other end, through a smooth passage conical mouth (12), a passage tube (13) and a connection tube (14), is coupled to an insulated wire of phase and neutral conduits (18), which is arranged as spread in the accessible part (1), so that the connected pair of wires (19) through a double input-output cone (20) terminates to a schuko-type socket terminal (21), and the other end of the insulated wire of phase and neutral conduits (18) -through a safety relay (22), an automatic circuit-supply interruption fuse (24), a thermal supply interruption fuse (25), a voltmeter (26), an amperometer (27), a power meter (28)- terminates to the schuko-type plug (23) for supplying devices via the power cord.

2. A new type of power cord according to claim 1, wherein the winding of the insulated wire with ground conduit (4) around the winding cylinder is performed automatically by the use of an electric motor (7), which has a gear (9) meshing to a geared disk (10) of the winding disk (3), and which is supplied by a rechargeable battery (11) and is activated by a button (29).

3. A new type of power cord according to claim 1, wherein the coupling of the insulated wire with ground conduit (4) to the insulated wire of phase and neutral conduits (18) is performed by the use of a connection component (33), which is fixed after the connection cone (14).

4. A new type of power cord according to claim 1, wherein the coupling of the insulated wire with ground conduit (4) to the insulated wire of phase and neutral conduits (18) is performed by means of a male velcro (31) and a female velcro (32).
